# EUROPEAN PATENT SPECIFICATION

(11) **EP 0 536 146 B1**
(45) Date of publication and mention of the grant of the patent: **30.12.1998**
(21) Application number: 91908970.6
(22) Date of filing: 26.04.1991
(51) Int. Cl.: C09J 133/08, C09J 133/02, C08F 2/54

(54) **ELECTRON-BEAM CURED EMULSION PRESSURE-SENSITIVE ADHESIVES**
ELEKTRONENSTRAHL GEHÄRTETE DRUCKEMPFINDLICHE KLEBSTOFFE AUF EMULSIONSBASIS
ADHESIFS DE CONTACT A BASE D'EMULSION POLYMERISEE PAR FAISCEAU D'ELECTRONS

(43) Date of publication of application: 14.04.1993
(73) Proprietor: AVERY DENNISON CORPORATION, Pasadena, CA 91109 (US)
(72) Inventor: MALLYA, Prakash, Pasadena, CA 91107 (US); PLAMTHOTTAM, Sebastian, S., Upland, CA 91786 (US); OZARI, Yehuda, Arcadia, CA 91006 (US)
(74) Representative: Kirkham, Nicholas Andrew
(86) International application number: US9102879
(87) International publication number: WO9219691

(56) References cited:
- JP-A-52 121 054
- JP-A-60 092 372
- JP-A-61 103 908
- US-A- 4 101 493
- US-A- 4 714 655
- US-A- 4 786 552
- US-A- 5 011 867

## Description

### Background of the Invention

The present invention is directed to electron beam or EB curing of emulsion-based pressure-sensitive adhesives to provide a pressure-sensitive adhesive with superior elevated temperature shear properties.

Concern over the environment has made attractive pressure-sensitive adhesive polymers formed by emulsion polymerization, as opposed to polymerization in organic solvents. Emulsion polymers can be coated onto a substrate, e.g. face material, release liner, and/or a transfer surface, and a pressure-sensitive adhesive layer formed upon water evaporation.

The possibility of preparing a pressure-sensitive adhesive in an emulsion and UV curing of pressure-sensitive adhesives has been mentioned in the art. Examples include U.S. Patent 3,637,615 to Coffman, U.S. Patent 4,069,123 to Skoultchi et al and U.S. Patent 4,185,050 to Lazear et al. This art has however only illustrated the preparation of polymers in an organic solvent and not in an aqueous media and therefore the effect of UV curing on a polymer prepared in an aqueous media has not been demonstrated.

We have found emulsion-based pressure-sensitive adhesives to have poor high-temperature peel and shear properties.

It is the purpose of the instant invention to provide a technique to improve the high-temperature performance of emulsion-based pressure-sensitive polymers without sacrificing significantly the ambient temperature performance.

According to a first aspect of the present invention there is provided a pressure-sensitive adhesive which comprises an emulsion polymer having a glass transition temperature of at least 20°C below the use temperature, and selected from the group consisting of branched emulsion polymers, linear emulsion polymers and mixtures thereof, each of said emulsion polymers independently formed of at least one first monomer which, when homopolymerized, has a glass transition temperature less than about -25°C and at least one second monomer which, when homopolymerized, has a glass transition temperature greater than about -25°C, and said emulsion polymer cured by electron-beam radiation in the presence of from 0 to 10% by weight based on the weight of the emulsion-polymer of a multifunctional additive, said multifunctional additive present in a positive amount when the emulsion polymer comprises a branched emulsion polymer, said pressure sensitive adhesive being cured to produce a 70°C shear of at least about 10 kiloseconds and a 180° peel of at least about 250 N/m, and a loop tack of at least about 200 N/m at an adhesive coat weight of 40 to 60 g/m².

According to a second aspect of the present invention there is provided a process for forming a pressure-sensitive adhesive comprising the steps of:
a) forming an acrylic emulsion polymer having a glass transition temperature of at least 20°C below the use temperature, and having a storage modulus (G') of from 3.2x10⁴Pa to 1.2x10⁵Pa at a frequency of 10⁻¹S⁻¹ and from 1.4x10⁵Pa to 5.2x10⁵Pa at a frequency of 10²S⁻¹ and a loss modulus (G") of from 9.5x10³Pa to 3.1x10⁴Pa at a frequency of 10^{-s} and 7x10⁴Pa to 5.6x10⁵Pa at a frequency of 10⁻¹s⁻¹ and being selected from the group consisting of branched emulsion polymers, linear emulsion polymers and mixtures thereof, wherein each said acrylic emulsion polymer is independently formed of a first acrylic monomer which, when homopolymerized, has a glass transition temperature less than about -25°C and at least one second monomer which, when homopolymerized, has a glass transition temperature greater than about -25°C;
b) curing said acrylic emulsion polymer by the action of electron-beam radiation at a level up to about 100 kGy and sufficient to substantially increase the 70°C shear of the emulsion polymer to at least 10 kiloseconds to provide a 180° peel of at least 250 N/m and a loop tack of at least 200 N/m at an adhesive coat weight at 40 to 60 g/m² in the presence of a multifunctional additive present in an amount of from 0 to 10% by weight of the acrylic emulsion polymer; said multifunctional additive being present in a positive amount at least when a branched emulsion polymer; and
c) forming a layer of pressure-sensitive adhesive from the cured acrylic emulsion polymer of step b).

Preferred embodiments of the invention are disclosed in the dependent claims.

Thus there are provided emulsion pressure-sensitive adhesive compositions curable on exposure to electron-beam (EB) radiation to form adhesives having increased elevated temperature shear properties without a significant change in ambient temperature properties. The adhesives are formed of one or more polymers having a glass transition temperature of at least 20°C below the use temperature. They may be branched emulsion polymers polymerized at temperatures of at least about 30°C, and predominantly linear emulsion polymers polymerized at a temperature less than about 20°C, and mixtures thereof.

The emulsion polymers are independently formed in emulsion of at least one first monomer which, when homopolymerized, has a glass transition temperature less than about -25°C and at least one second monomer which, when homopolymerized, has a glass transition temperature greater than about -25°C. A multifunctional additive is provided to aid cure of branched polymers and benefits all emulsion systems. Multifunctional additives are preferably present in an amount up to about 10% by weight based on the weight of the emulsion-polymers. If employed, the multifunctional additive is preferably present in a concentration of from about 0.2 to about 5% by weight of the emulsion polymer while presently preferred multifunctional additives consist of pentaerythritol triacrylate, trimethylolpropane trimethacrylate, and 1,6-hexanediol diacrylate, and mixtures thereof.

Cure is achieved at EB dosages up to about 100 kiloGray (kGy) preferably from about 5 to about 50 kGy. There may be realized upon EB cure pressure-sensitive adhesives having 180° peel in excess of about 250 N/m and a loop tack in excess of about 200 N/m while achieving a 70°C shear of at least 10 kiloseconds normally in excess of 86 kiloseconds. Shear values at 100°C in excess of 10 kiloseconds and surprisingly in excess of 86 kiloseconds can also be achieved. As compared to uncured polymers elevated temperature shear (70°C and 100°C) may be increased several fold.

Acrylic-based emulsion polymers are preferred. The preferred polymers have a storage modulus (G') of from about 3.2x10⁴Pa to about 1.2x10⁵Pa at a frequency of 10⁻¹s⁻¹ and from about 1.4x10⁵ Pa to about 5.2x10⁵ Pa at a frequency of 10²s⁻¹ and a loss modulus (G") of from about 9.5x10³ Pa to about 3.1x10⁴ Pa at a frequency of 10⁻¹s⁻¹ and about 7x10⁴ Pa to about 5.6x10⁵ Pa at a frequency of 10²s⁻¹. Acrylic emulsion polymers are preferably formed of about 50 to about 95% by weight of a first monomer which when homopolymerized has a glass transition temperature less than about -25°C and at least one second monomer which when homopolymerized has a glass transition temperature greater than about -25°C.

### The Drawing

The attached drawing shows the change in adhesion bond with time of the same composition which had not been exposed (Control L) to electron-beam radiation and which had been exposed to such radiation showing that EB radiation does not detract from the ability of an adhesive to increase adhesion with dwell.

### Detailed Description

According to the present invention, high-temperature performance of emulsion pressure-sensitive adhesives, preferably acrylic-based pressure-sensitive adhesives, is significantly improved by the use of electron-beam radiation. In one embodiment, the emulsion pressure-sensitive adhesives are prepared in a conventional manner and modified by the addition of multifunctional additives and after coating onto a suitable substrate, electron-beam (EB) cured at dosage levels sufficient to increase elevated temperature adhesive performance. Dosage levels employed are up to about 100 kiloGray (kGy) preferably from 5 to 50 kGy. For instance, dosages as low as 10 kiloGray (kGy) can enable a realization of and increase the 70°C shear from 0.4 kilosecond to an excess of 86 kiloseconds at a minimal loss of ambient temperature properties such as 180° peel and loop tack.

By the term "multifunctional additive" there is meant monomers, dimers, trimers, etc., having two or more reactive sites which undergo reactions with the pressure-sensitive adhesive on exposure to electron-beam.

The amount of multifunctional additive can be significantly minimized or eliminated if there is utilized, as part of the pressure-sensitive adhesive, emulsion polymers synthesized at temperatures below about 25°C to provide polymers of greater linearity and of relatively small particle size. Such pressure-sensitive adhesives, when subjected to electron-beam radiation at levels of about 30 kGy or more, exhibit unusually high elevated temperature shear properties again exceeding 86 kiloseconds at temperatures of 70°C and 100°C.

The use of electron-beam radiation enables effective resort to water-based systems for producing high performance pressure-sensitive adhesives.

The pressure-sensitive adhesives preferably provided in accordance with the instant invention have a glass transition temperature at least 20°C to 70°C below use temperature and rheology wherein storage modulus (G') and loss modulus (G") are respectively in the range of about:
G' - 3.2x10⁴ Pa to 1.2x10⁵ Pa (at a frequency of 10⁻¹s⁻¹) and
1.4x10⁵ Pa to 5.2x10⁵ Pa (at a frequency of 10²s⁻¹)
G" - 9.5x10³ Pa to 3.1x10⁴ Pa (at a frequency of 10⁻¹s⁻¹) and
7x10⁴ Pa to 5.6x10⁵ Pa (at a frequency of 10²s⁻¹) as determined by Method E of ASTM D-4065-82 modified for shear oscillation

High-temperature performance pressure-sensitive adhesives are produced in accordance with the instant invention by coating emulsion pressure-sensitive adhesive polymers onto a substrate, evaporating the water and subjecting the dry coatings to electron-beam radiation at levels sufficient to increase high-temperature performance with minimal loss of other properties.

Emulsion-based pressure-sensitive adhesive polymers for use in the invention may be prepared in accordance with the present invention by copolymerizing monomers to yield a polymer having a glass transition temperature from 20°C to 70°C below use temperature preferably from 50°C to 70°C below use temperature. To prepare an emulsion having direct utility for substrate coating, solids content will generally range from 40 to 60% by weight solids. Catalysts such as tertiary butyl hydroperoxide or the like may be present in an amount of from about 0.15 to about 0.5 part by weight per 100 parts monomers with surfactant levels ranging from 0.5% to 5% by weight based on weight of the monomers. Reaction temperature, catalyst content and surfactant levels control the nature of the polymer formed. While not bound by theory, elevated reaction temperatures, e.g. temperatures of about 30°C or more, tend to yield polymers which are more branched than polymers synthesized at lower temperatures. Thus, as used herein, the term "branched polymer" means a polymer emulsion synthesized at a temperature above about 30°C and is not normally responsive to the action of EB-radiation in the absence of a multifunctional monomer; while the term "linear polymer" means a polymer emulsion synthesized at a temperature below about 25°C and responsive to the action of EB radiation without the addition of a multifunctional additive. An exception for the "branched polymers" may be situations where a pendant group(s) of the monomers leading to the polymer are reactive and/or where the surfactant employed is reactive with the monomers and/or polymer. Reactive surfactants are those based on C₇-C₁₆ unsaturated fatty acids. The inclusion of a multifunctional additive, generally in levels in an amount up to about 10% preferably from 0.2 to 5% by weight of total adhesive polymer content, enables a marked increase of high-temperature performance at EB dosage levels as low as 10 kGy or less. In fact, there appears to be a peak where, after some level of EB dosage is reached, high-temperature performance although improved, begins to drop off due to excessive crosslinking.

By a "multifunctional additive" as used herein, there is meant an additive having 2 or more pendant functional groups, preferably acrylate or methacrylate groups. As representa-tive multifunctional additives there may be mentioned pentaerythritol triacrylate (PETA), triethyleneglycol diacrylate, triethyleneglycol dimethacrylate, trimethylolpropanetrimethacrylate (TMPTMA), trimethylolpropane triacrylate, tripropyleneglycol diacrylate, tripropylene- glycol dimethacrylate, 1,3-butyleneglycol dimethacrylate, tetraethyleneglycol dimethacrylate, 1,6-hexanediol diacrylate (HDDA), and the like. Multifunctional additives having ethoxylated and propoxylated backbones may also be effectively used. As indicated, concentrations will vary depending on polymer nature and electron-beam dosage levels.

In general, multifunctional additive concentrations can range from 0 to about 10% or more by weight of the emulsion polymer. None is required for highly linear polymers. Their presence is however beneficial. Blends of linear and branched polymers need multifunctional additives corresponding to the level of branched polymer in the mixture. A presently preferred range is from 0.2 to 5% by weight based on the weight of the polymers.

While not bound by theory, a possible explanation for the beneficial use of multifunctional additives is that they may have a plasticizing effect on high gel content of branched emulsion polymers, i.e. polymers prepared at temperatures of about 30°C or more. Because of high gel content, diffusion of polymer chains between neighboring particles may be restricted. The addition of the multifunctional additives may have a plasticizing effect and lead to improved diffusion of the polymer chains between particles, and crosslinking the polymer chains by EB radiation provides high elevated temperature shear with minimal, if no, loss in ambient temperature performance. Another possibility is that bridging between polymer particles occurs where otherwise crosslinking would be restricted to the body of the particle with interparticle bonds remaining low.

Forming the emulsion using low temperatures, high surfactant levels, and low initiator levels forms a pressure-sensitive adhesive of relatively low particle size. These pressure-sensitive adhesives, when also subjected to relatively low levels of EB radiation, e.g. about 30 kGy, also exhibit unusually high elevated temperature performance despite the absence of added multifunctional additives, although the multifunctional additives can be effectively used to lower EB dosage levels.

A possible explanation for this is that at low temperatures, branching and crosslinking reactions are minimized and the polymer obtained is of lower gel content and is more linear than those synthesized at higher temperatures. This appears to enhance interparticle diffusion of the polymer chains despite even higher molecular weight. The high degree of diffusion leads to greater entanglement between the polymer chains of neighboring particles allowing the use of EB radiation without a multifunctional additive to achieve high elevated temperature performance.

The emulsion polymers provided as pressure-sensitive adhesives of the instant invention generally comprise from about 50% to about 95% by weight of one or more first monomer, which if homopolymerized, would have a glass transition temperature of less than about -25°C based on the total weight of the monomers. Exemplary are the alkyl acrylates, such as butyl acrylate, propylacrylate, 2-ethylhexyl acrylate, isooctyl acrylate, isodecyl acrylate; mono and diesters of unsaturated dicarboxylic acids, such as dibutyl fumarate and the like.

The balance of the monomer system is comprised of second monomers which if homopolymerized would have a glass-transition temperature greater than -25°C, normally greater than about 10°C. Among such monomers there may be mentioned ethyl acrylate, alkyl methacrylates, such as methyl methacrylate, ethyl methacrylate, butyl methacrylate and the like; copolymerizable vinyl-unsaturated monomers, such as vinyl acetate, vinyl propionate and the like; and styrenic monomers, such as styrene, methylstyrene and the like; unsaturated carboxylic acids, such as acrylic acid, methacrylic acid, itaconic acid, fumaric acid and the like. As indicated, emulsion polymers prepared in accordance with the present invention, to be functional pressure-sensitive adhesives, must have a net effective glass-transition temperature of from 20° to 70°C below the use temperature, preferably from 50° to 70°C below the use temperature. Accordingly, the monomers used in the preparation of polymers of the instant invention are proportioned to provide polymerization products falling within the designated glass-transition temperature. It is for this reason that the first monomers, preferably one or more alkyl acrylates, are provided as the bulk of the monomers employed and are typically present in an amount of from about 50 to about 95 percent by weight based on the total weight of the monomers. It is also desired that they have pendant acrylate or methacrylate groups to enhance EB cure.

The emulsions formed including added multifunctional additives are coated on any suitable substrate such as face stock, release liner stock or transfer surfaces by means known in the art. Net solids coating weights generally range from 40 or less to 60 grams or more per square meter. Following evaporation of water, the residual solids are exposed to electron-beam radiation at levels sufficient to increase high-temperature properties, particularly shear, without adversely affecting peel and tack at normal use temperatures. Electron-beam dosages may range from 10 kiloGray (kGy) or less up to 100 kGy preferably 50 kGy or less depending on the nature of the polymer and amount of multifunctional additives present, with required dosages being lowered by the presence of a multifunctional additive. The presence of a multifunctional additive can also create a limit on the EB dosages used. A peak is reached at some level after which the level of increase of elevated temperature shear will be reduced but still be above the level which existed prior to cure.

It will be appreciated that there may be included in the pressure-sensitive adhesives, tackifiers, fillers, plasticizers and the like.

The following Examples illustrate the invention. With reference thereto, multifunctional monomer is given in percent by weight. Test methods utilized were as follows: shear by ASTM D-3654-78 and D-1000-68 and PSTC (Pressure-Sensitive Tape Council) Test #7, 6th Edition (1/2" x 1/2" 500 G, 0 dwell at 70°C and/or 100°C); 180° peel by PSTC Test #1, 6th Edition (20 minute dwell) and loop tack by PSTC Test #7, 6th Edition.

### Emulsion Polymer 1 (E-1) and Controls A to E and Examples 1-6

To 1-liter jacketed reactor flask, fitted with a mechanical stirrer, there was charged with 85.0 grams deionized water, 0.05 gram ferric EDTA (ethylenediamine- tetraacetic acid), 0.5 gram diammonium phosphate, 0.55 gram Dowfax 2A1 (commercially available from Dow Chemical Co., 45% active) and 50.0 grams of dibutyl fumarate.

A monomer pre-emulsion was made up by dissolving 8.93 grams of Triton X-200 (commercially available from Rohm & Haas Co., 28% active) in 75.0 grams deionized water and adding a mixture of 137.5 grams 2-ethyl hexyl acrylate, 57.5 grams methyl methacrylate, 5.0 grams acrylic acid, 1.0 gram t-butyl hydroperoxide (70% active), 0.35 gram n-dodecyl mercaptan, and 0.375 gram 1,6-hexanediol diacrylate. 57.13 grams of this pre-emulsion was added to the reactor flask, the contents purged with N₂ and temperature maintained at 30°C.

An aqueous solution was made up by dissolving 1.0 gram of sodium formaldehyde sulfoxylate (commercially available from Diamond Shamrock under the trade name Hydrosulfite AWC) in 75 grams deionized water. 11.4 grams of this solution was added to the reactor flask and 10 minutes later the contents were heated to 45°C and the simultaneous addition of the remaining 64.6 grams of aqueous solution and 228.53 grams of pre-emulsion was started. The pre-emulsion was added over 2.5 hours and aqueous solution, over 3 hours. The temperature was maintained between 45 and 48°C throughout the addition. After the additions were complete, the contents were held at this temperature for an additional hour and then discharged. The total coagulum on filtering through 150 µm screen was less than 0.02% (dry).

The performance properties of the adhesive coating obtained from the above emulsion polymer (E-1) are listed in Table I. The latex had a solids content of 51.0%, viscosity at pH = 7.0 being 0.44 Pa^{·}S (Brookfield RVT, #4 @ 100 rpm, NH₃ as the base), particle size of 139 nm and excellent mechanial stability (Haake, 40,000 s⁻¹). In the evaluation, the multifunctional acrylate, if present, was added to the emulsion and the emulsion coated onto 50.8 µm (2 mil) Mylar to a level up to 54 g/m² and if EB cured, EB cured through Mylar.

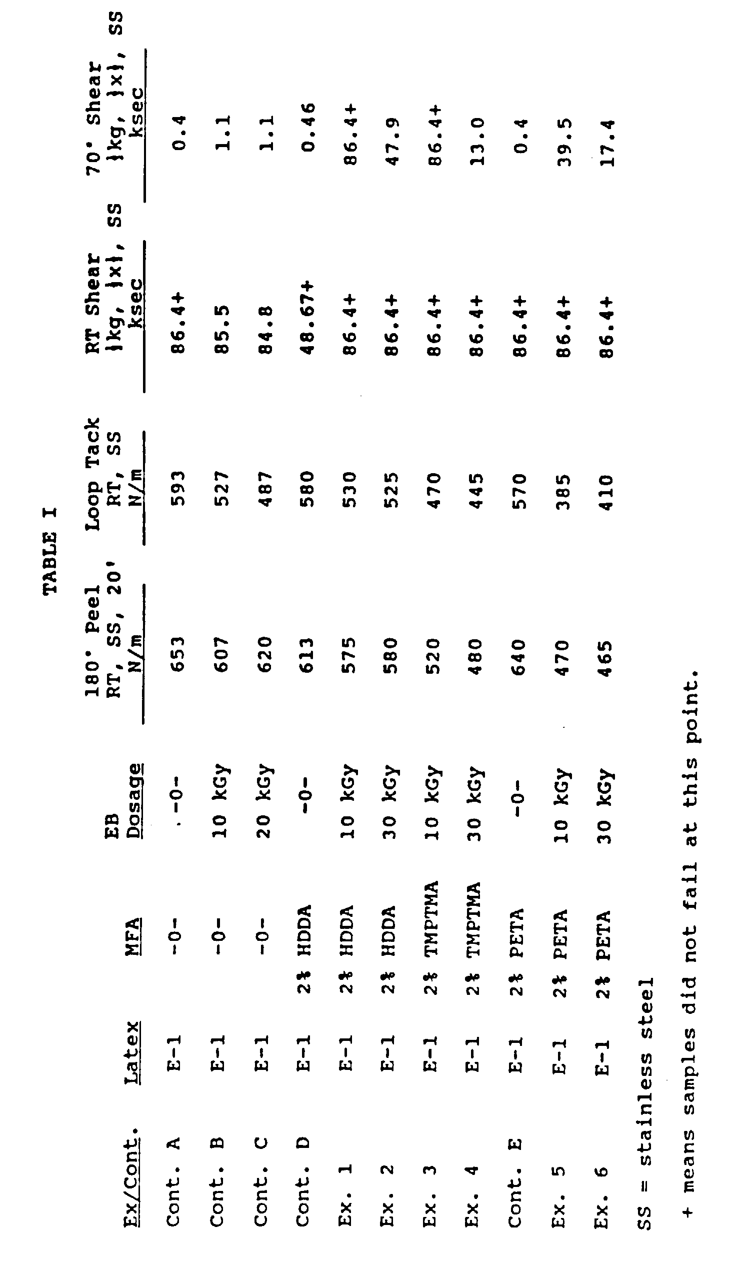

### Emulsion Polymers (E-2) and (E-3) and Controls G and H and Examples 7-13

This emulsion polymer was synthesized using the equipment as outlined in Example 1. The reactor was charged with 175 grams deionized water, 0.05 gram ferric EDTA and 1.88 grams Aerosol MA 80 (commercially available from American Cyanamid, 80% active). A monomer pre-emulsion was made up by dissolving 20.68 grams of Triton X-200 and 7.0 grams of Aerosol MA-80 in 116.8 grams of distilled water and adding a mixture of 266.2 grams 2-ethylhexyl acrylate, 14.01 grams acrylic acid and 0.56 gram t-butyl hydroperoxide. An aqueous solution was made up by dissolving 0.6 gram of hydrosulfite AWC in 150 grams of deionized water. The reactor mixture was purged with nitrogen, cooled to 5°C, and the pre-emulsion and aqueous solution feeds were started simultaneously. The pre-emulsion was added over 2.5 hours, aqueous solution over 2.75 hours, temperature being maintained between 5 and 8°C. The contents were held at 5°C for 2 more hours, discharged (after filtering through cheesecloth) and neutralized to a pH of 7.2 with NH₃. The total coagulum was 1.0 gram, the solids content of the emulsion was 38.9%, and the particle size was 139 nm. The performance of this polymer and another polymer (E-3) prepared in the same manner are shown in Table II. E-3 contained 90 parts 2-ethyl hexyl acrylate and 10 parts acrylic acid. Respective coating weights were 42 and 44 g/m² on 50.8 µm (2 mil) Mylar with cure through Mylar.

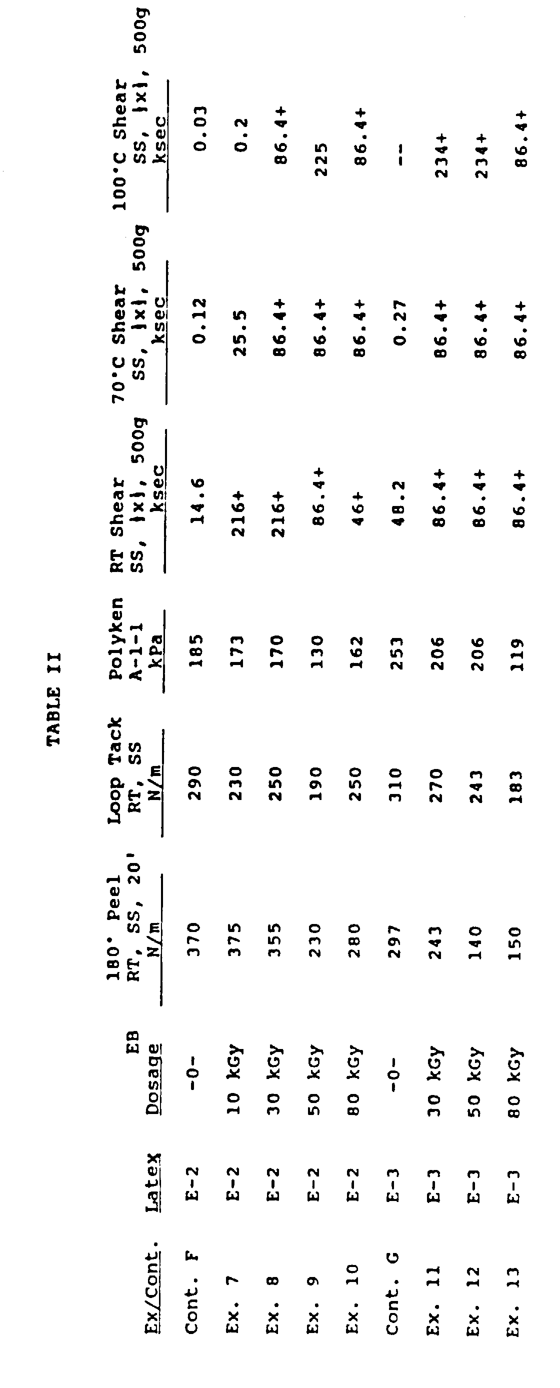

### Emulsion Polymers (E-4) and (E-5) and Controls I and J and Examples 14-18

This emulsion polymer was synthesized using the equipment and procedure outlined for polymer E-2. The initial reactor charge had in addition to the ingredients listed in Example 2, 11.07 grams of Triton X-200. The pre-emulsion was made up by dissolving 22.14 grams of Triton X-200 in 125 grams of deionized water and adding a mixture of 217.5 grams of 2-ethylhexyl acrylate, 67.5 grams of vinyl acetate, 15.0 grams of acrylic acid, and 0.6 grams of t-butyl hydroperoxide. The aqueous solution was made up by dissolving 3.75 grams of Aerosol MA-80 and 0.6 gram of hydrosulfite in 150.0 grams of deionized water. The resulting latex had very low viscosity and no coagulum. The solids content of the latex was 38.0%, particle size = 161 nm, and viscosity at pH = 6.2 was 4.56 Pa^{.}s (Brookfield, RVT, #7 @ 100 rpm).

The performance of this polymer is listed in Table III (E-4) along with a polymer prepared in the same manner but containing 95 parts isooctylacrylate and 5 parts acrylic acid (E-5). The latexes were coated to a level between 45 and 47 gr/m² on 50.8 µm (2 mil) Mylar with cure through mylar.

The product of Example 15 when allowed to dwell for 24 hours displayed an increase from 180° peel to 490 N/m and in Example 16 increased to 455 N/m.

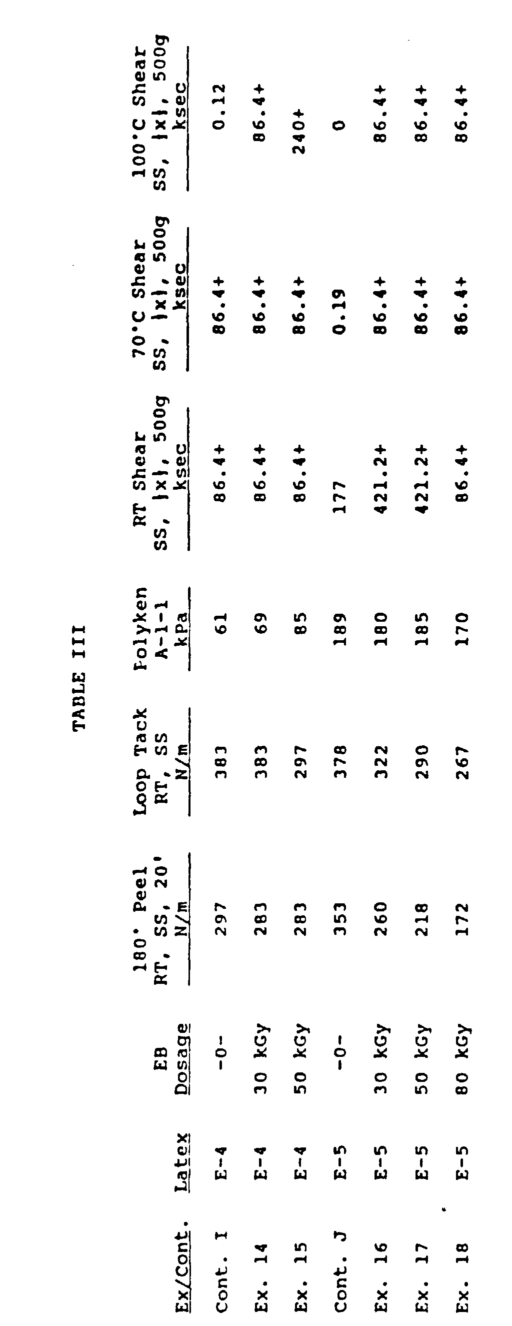

### Control K and Examples 19-26

Table IV shows the blend exhibiting high 180° peel and tack value compared to base low-temperature polymers retaining the elevated temperature (70°C) shear properties. Table V shows the good peel adhesion properties to different substrates at elevated temperature. For this test the adhesive was coated on 50.8 µm (2 mil) Mylar at 99 g/sq. m. Peel values are in N/m for the substrates shown.

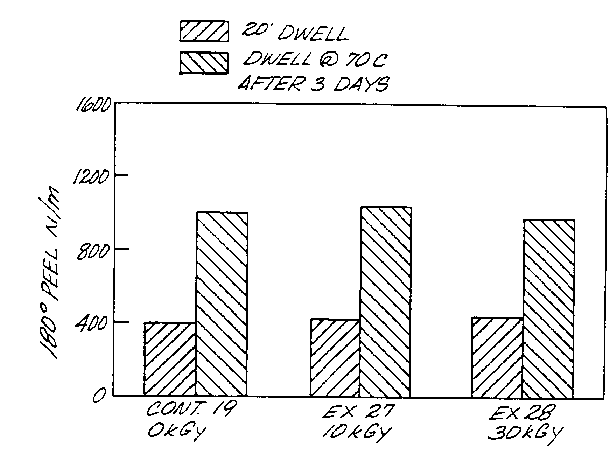

FIG. 1 illustrates the value of Composition B as a repositionable adhesive in that bond strength more than doubled after 3 days dwell at 70°C. It is significant that electron-beam cure, while providing the benefit of elevated temperature shear, did not detract from the advantageous peel adhesion buildup on extended dwell.

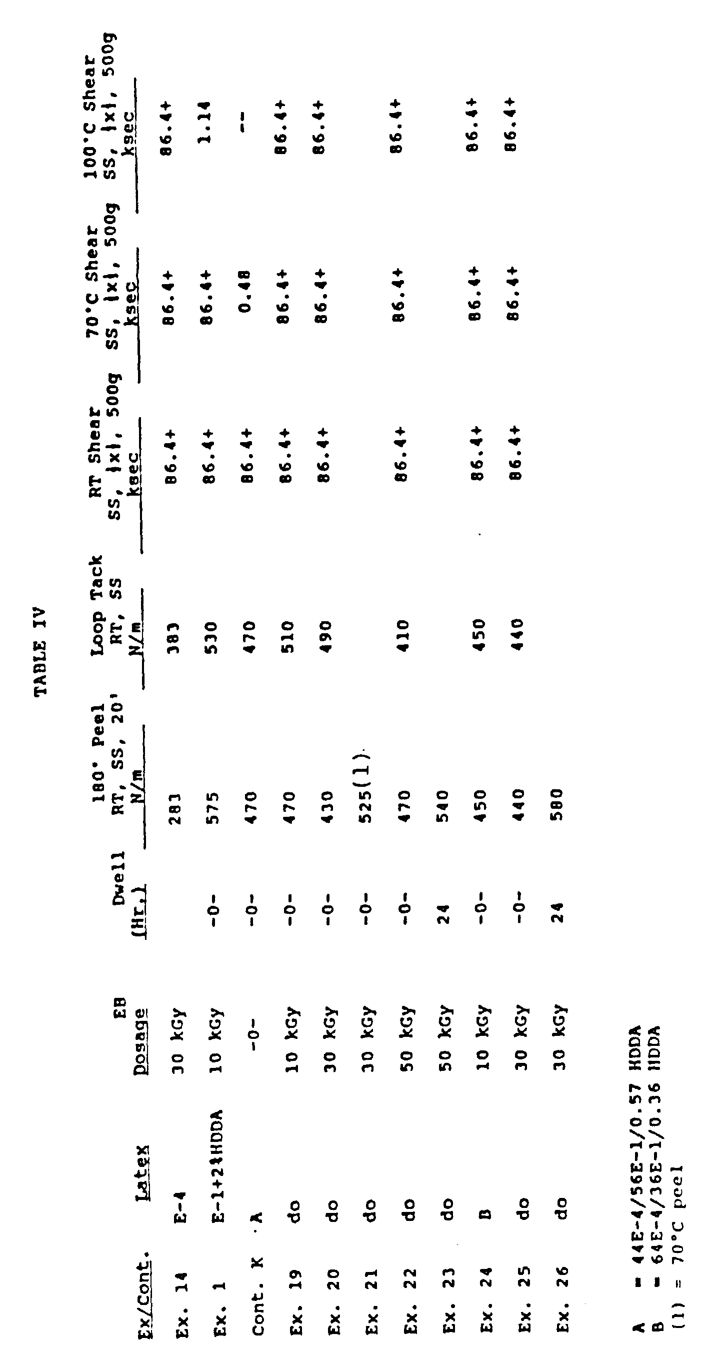

**TABLE V**

| 180° Peel | Substrate SS | ABS | NAD |
|---|---|---|---|
| 70°C | 780 | 480 | 455 |
| 100°C | 400 | 390 | 350 |
| ABS = Acrylonitrite-Butadiene-Styrene | | | |
| NAD = Surface-coated with a solvent-based paint, i.e. non-aqueous dispersion | | | |

Table VI shows the glass transition temperature and mechanical properties of various emulsion polymers of this invention.

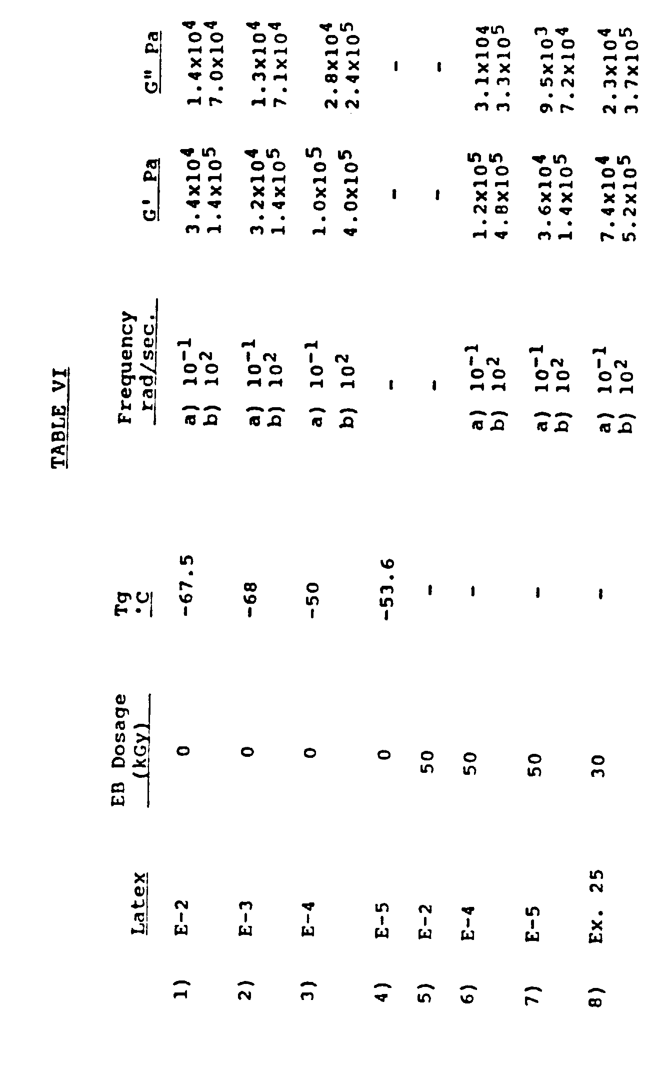

## Claims

1. A pressure-sensitive adhesive which comprises an emulsion polymer having a glass transition temperature of at least 20°C below the use temperature, and selected from the group consisting of branched emulsion polymers, linear emulsion polymers and mixtures thereof, each of said emulsion polymers independently formed of at least one first monomer which, when homopolymerized, has a glass transition temperature less than about -25°C and at least one second monomer which, when homopolymerized, has a glass transition temperature greater than about -25°C, and said emulsion polymer being cured by electron-beam radiation in the presence of from 0 to 10% by weight based on the weight of the emulsion-polymer of a multifunctional additive, said multifunctional additive present in a positive amount when the emulsion polymer comprises a branched emulsion polymer, said pressure sensitive adhesive being cured to produce a 70°C shear of at least about 10 kiloseconds and a 180° peel of at least about 250 N/m, and a loop tack of at least about 200 N/m at an adhesive coat weight of 40 to 60 g/m².

2. A pressure-sensitive adhesive as claimed in claim 1 in which the branched chain emulsion polymer is polymerized in emulsion at temperatures of at least about 30°C, and the linear emulsion polymer is polymerized in emulsion at a temperature less than about 20°C.

3. A pressure-sensitive adhesive as claimed in any one of the previous claims in which each emulsion polymer is independently an acrylic emulsion polymer having a glass transition temperature of at least 20°C below the use temperature and having a storage modulus (G') of from 3.2x10⁴Pa to 1.2x10⁵Pa at a frequency of 10⁻¹s⁻¹ and from 1.4x10⁵Pa to 5.2x10⁵Pa at a frequency of 10²s⁻¹ and a loss modulus (G") of from 9.5x10³Pa to 3.1x10⁴Pa at a frequency of 10⁻¹s⁻¹ and 7x10⁴Pa to 5.6x10⁵Pa at a frequency of 10²s⁻¹ and independently formed of 50 to 95% by weight of a first acrylic monomer which, when homopolymerized, has a glass transition temperature less than about -25°C and at least one second monomer which, when homopolymerized, has a glass transition temperature greater than about -25°C.

4. A pressure-sensitive adhesive as claimed in any one of the previous claims in which the first monomer is selected from alkyl acrylates, monoesters of unsaturated dicarboxylic acids and diesters of unsaturated dicarboxylic acids, and mixtures thereof; 2-ethyl hexylacrylate, isooctyl acrylate, and mixtures thereof.

5. A pressure-sensitive adhesive as claimed in any of the previous claims in which the second monomer comprises acrylic acid or includes an unsaturated carboxylic acid.

6. A pressure-sensitive adhesive as claimed in any of the previous claims in which the multi functional additive is present in a positive amount up to about 5% by weight in the branched polymer, optionally from about 0.2 to about 5% by weight of the branched polymer.

7. A pressure-sensitive adhesive as claimed in any one of the previous claims in which the multifunctional additive is selected from the group consisting of pentaerythritol triacrylate, trimethylolpropane trimethacrylate, and 1,6-hexanediol diacrylate, and mixtures thereof.

8. A pressure-sensitive adhesive as claimed in any one of the previous claims in which said emulsion polymer is cured by exposure to electron-beam radiation at a dosage of up to about 100 kGy, for example from 5 to 50 kGy.

9. A pressure-sensitive adhesive as claimed in any one of the previous claims in which the electron-beam dosage used for cure is sufficient to increase the 70°C shear of the cured emulsion polymer to at least about 86 kiloseconds and optionally, while providing 180° peel of at least about 250 N/m and loop tack of at least about 200 N/m at an adhesive coat weight of 40 to 60 g/m².

10. A pressure-sensitive adhesive as claimed in any of the previous claims having increased elevated temperature shear properties and comprise an electron-beam cured acrylic emulsion polymer having a glass transition temperature of at least 20°C below the use temperature, a storage modulus (G') of from 3.2x10⁴Pa to 1.2x10⁵Pa at a frequency of 10⁻⁵s⁻¹ and from 1.4x10⁵Pa to 5.2x10⁵Pa at a frequency of 10⁵s⁻¹ and a loss modulus (G") of from 9.5x10³Pa to 3.1x10⁴Pa at a frequency of 10¹s⁻¹ and 7x10⁴Pa to 5.6x10⁵ Pa at a frequency of 10²s⁻¹, said acrylic emulsion polymer formed of a mixture of at least one acrylic emulsion polymer polymerized in emulsion at a temperature of at least about 30°C and at least one linear emulsion polymer polymerized in emulsion at a temperature less than about 20°C, said emulsion polymers independently formed of a first acrylic monomer which, when homopolymerized, has a glass transition temperature less than about -25°C and comprising one alkyl acrylate and at least one second monomer which, when homopolymerized, has a glass transition temperature greater than about -25°C, and comprising at least one unsaturated carboxylic acid, said acrylic emulsion polymers having been exposed to electron-beam radiation at a dosage level of from 5 to 50 kGy and sufficient to result in an increase in the 70°C shear of said acrylic emulsion polymer to at least about 86 kiloseconds in the presence of from 0.2 to 5% by weight based on the weight of the acrylic emulsion polymers of at least one multifunctional monomer, said emulsion polymers having a 180° peel of at least about 250 N/m and a loop tack of at least about 200 N/m at an adhesive coat weight of 40 to 60 g/m².

11. A pressure-sensitive adhesive as claimed in any one of the previous claims in which the total of first acrylic monomer present in the emulsion polymer is from 50 to 95% by weight of the polymer.

12. A process for forming a pressure-sensitive adhesive comprising the steps of:
a) forming an acrylic emulsion polymer having a glass transition temperature of at least 20°C below the use temperature, and having a storage modulus (G') of from 3.2x10⁴Pa to 1.2x10⁵Pa at a frequency of 10⁻¹S⁻¹ and from 1.4x10⁵Pa to 5.2x10⁵Pa at a frequency of 10²S⁻¹ and a loss modulus (G") of from 9.5x10³Pa to 3.1x10⁴Pa at a frequency of 10¹s⁻¹ and 7x10⁴Pa to 5.6x10⁵Pa at a frequency of 10⁻¹s⁻¹ and being selected from the group consisting of branched acrylic emulsion polymers, linear acrylic emulsion polymers and mixtures thereof, wherein each said acrylic emulsion polymer is independently formed of a first acrylic monomer which, when homopolymerized, has a glass transition temperature less than about -25°C and at least one second monomer which, when homopolymerized, has a glass transition temperature greater than about -25°C;
b) curing said acrylic emulsion polymer by the action of electron-beam radiation at a level up to about 100 kGy and sufficient to substantially increase the 70°C shear of the emulsion polymer to at least 10 kiloseconds to provide a 180° peel of at least 250 N/m and a loop tack of at least 200 N/m at an adhesive coat weight at 40 to 60 g/m² in the presence of a multifunctional additive present in an amount of from 0 to 10% by weight of the acrylic emulsion polymer; said multifunctional additive being present in a positive amount at least when a branched emulsion polymer; and
c) forming a layer of pressure-sensitive adhesive from the cured acrylic emulsion polymer of step b).

13. A process as claimed in claim 12 in which the cure occurred at an electron-beam dosage from 5 to 50 kGy.

14. A process as claimed in claim 12 or 13 in which the 70°C shear is increased to at least 86 kiloseconds.

15. A process as claimed in claim 12, 13 or 14 in which the multifunctional additive is selected from the group consisting of pentaerythritol triacrylate, trimethylolpropane trimethacrylate, and 1,6-hexanediol diacrylate, and mixtures thereof.

16. A process as claimed in any one of claims 12 to 15 in which the electron-beam dosage is from 5 to 50 kGy.

17. A process as claimed in any one of claims 12 to 16 in which the first monomer is present in an amount of from 50 to 95% by weight of the polymer and selected from the group consisting of alkyl acrylates, monoesters of unsaturated dicarboxylic acids and diesters of unsaturated dicarboxylic acids, and mixtures thereof.

18. A process as claimed in any one of claims 12 to 17 in which the second monomer includes an unsaturated carboxylic acid, e.g. acrylic acid.

## Patentansprüche

1. Haftklebstoff aus einem Emulsionspolymeren mit einer Glasübergangstemperatur, die mindestens 20°C unterhalb der Gebrauchstemperatur liegt, ausgewählt aus der Gruppe bestehend aus verzweigten Emulsionspolymeren, linearen Emulsionspolymeren, sowie Mischungen daraus, wobei jedes der genannten Emulsionspolymeren unabhängig voneinander gebildet wird aus mindestens einem ersten Monomeren, das, wenn es homopolymerisiert wird, eine Glasübergangstemperatur von weniger als etwa -25°C hat und mindestens einem zweiten Monomeren, welches, wenn es homopolymerisiert wird, eine Glasübergangstemperatur von mehr als etwa -25°C hat, und wobei das genannte Emulsionspolymer durch Elektronenstrahlbestrahlung in Gegenwart von 0 bis 10 Gew.-%, bezogen auf das Gewicht des Emulsionspolymeren, eines multifunktionalen Additivs gehärtet wird, wobei das genannte multifunktionale Additiv in einer vorteilhaften Menge vorhanden ist, wenn das Emulsionspolymer ein verzweigtes Emulsionspolymer enthält, und wobei der genannte Haftklebstoff gehärtet wurde, um eine 70°C-Scherung von mindestens etwa 10 Kilosekunden und eine 180°-Abziehbarkeit von mindestens etwa 250 N/m, sowie eine Schlaufenhaftfähigkeit (loop tack) von mindestens etwa 200 N/m bei einem Gewicht des Klebstoffüberzugs von 40 bis 60 g/m² zu erhalten.

2. Haftklebstoff gemäß Anspruch 1, wobei das verzweigtkettige Emulsionspolymer in Emulsion bei Temperaturen von mindestens etwa 30°C polymerisiert wird und das lineare Emulsionspolymer bei einer Temperatur von weniger als etwa 20°C in Emulsion polymerisiert wird.

3. Haftklebstoff gemäß einem oder mehreren der vorhergehenden Ansprüche, wobei jedes Emulsionspolymer unabhängig voneinander ein acrylisches Emulsionspolymer mit einer Glasübergangstemperatur ist, die mindestens 20°C unterhalb der Gebrauchstemperatur liegt und einen Speichermodul (G') von 3,2x10⁴ Pa bis 1,2x10⁵ Pa bei einer Frequenz von 10⁻¹s⁻¹ und vor 1,4x10⁵ Pa bis 5,2x10⁵ Pa bei einer Frequenz von 10²s⁻¹, sowie einen Verlustmodul (G") von 9,5x10³ Pa bis 3,1x10⁴ Pa bei einer Frequenz von 10⁻¹s⁻¹ und 7x10⁴ Pa bis 5,6x10⁵ Pa bei einer Frequenz von 10²s⁻¹ hat, und unabhängig voneinander aus 50 bis 95 Gew.-% eines ersten acrylischen Monomeren gebildet wird, das, wenn es homopolymerisiert wird, eine Glasübergangstemperatur von weniger als etwa -25°C aufweist und mindestens einem zweiten Monomeren, das, wenn es homopolymerisiert wird, eine Glasübergangstemperatur von mehr als etwa -25°C aufweist.

4. , Haftklebstoff gemäß einem oder mehreren der vorhergehenden Ansprüche, wobei das erste Monomer ausgewählt wird aus Alkylacrylaten, Monoestern von ungesättigten Dicarbonsäuren und Diestern von ungesättigten Dicarbonsäuren, sowie Miscbungen davon, 2-Ethylhexylacrylat, Isooctylacrylat, sowie Mischungen daraus.

5. Haftklebstoff gemäß einem oder mehreren der vorhergehenden Ansprüche, wobei das zweite Monomer eine Acrylsäure aufweist oder eine ungesättigte Carbonsäure enthält.

6. Haftklebstoff gemäß einem oder mehreren der vorhergehenden Ansprüche, wobei das multifunktionale Additiv in einer vorteilhaften Menge von bis zu etwa 5 Gew.-% in dem verzweigten Polymeren vorhanden ist, wahlweise von etwa 0,2 bis etwa 5 Gew.-% des verzweigten Polymeren.

7. Haftklebstoff gemäß einem der mehreren der vorhergehenden Ansprüche, wobei das multifunktionale Additiv ausgewählt wird aus der Gruppe bestehend aus Pentaerythrit-triacrylat, Trimethylolpropan-trimethacrylat und 1,6-Hexandiol-diacrylat, sowie Mischungen daraus.

8. Haftklebstoff gemäß einem oder mehreren der vorhergehenden Ansprüche, wobei das genannte Emulsionspolymere gehärtet wird, indem es einer Elektronenstrahlbestrahlung mit einer Dosis von bis zu etwa 100 kGy, beispielsweise von 5 bis 50 kGy, ausgesetzt wird.

9. Haftklebstoff gemäß einem oder mehreren der vorhergehenden Ansprüche, wobei die Elektronenstrahldosis, die für die Härtung verwendet wird, ausreichend ist, um die 70°C-Scherung des gehärteten Emulsionspolymeren auf mindestens etwa 86 Kilosekunden zu erhöhen, und wahlweise eine 180°-Abziehbarkeit von mindestens etwa 250 N/m und eine Schlaufenhaftfähigkeit von mindestens etwa 200 N/m bei einem Gewicht des Klebstoffüberzugs von 40 bis 60 g/m² zur Verfügung zu stellen.

10. Haftklebstoff gemäß einem oder mehreren der vorhergehenden Ansprüche, mit verbesserten Schereigenschaften bei erhöhten Temperaturen, der ein elektronenstrahlgehärtetes acrylisches Emulsionspolymer beinhaltet, das eine Glasübergangstemperatur von mindestens 20°C unterhalb der Gebrauchstemperatur hat, einen Speichermodul (G') von 3,2 x 10⁴ Pa bis 1,2 x 10⁵ Pa bei einer Frequenz von 10⁻⁵s⁻¹ und von 1,4 x 10⁵ Pa bis 5,2 x 10⁵ Pa bei einer Frequenz von 10⁵s⁻¹ und einem Verlustmodul (G") von 9,5 x 10³ Pa bis 3,1 x 10⁴ Pa bei einer Frequenz von 10¹s⁻¹ und 7x10⁴ Pa bis 5,6 x 10⁵ Pa bei einer Frequenz von 10²s⁻¹ hat, wobei das genannte acrylische Emulsionspolymere aus einer Mischung aus mindestens einem acrylischen Emulsionspolymeren gebildet wird, das in Emulsion bei einer Temperatur von mindestens 30°C polymerisiert wird und mindestens einem linearen Emulsionspolymeren, das in Emulsion bei einer Temperatur von weniger als 20°C polymerisiert wird, wobei die genannten Emulsionspolymere unabhängig voneinander aus einem ersten acrylischen Monomeren gebildet werden, welches, wenn es homopolymerisiert wird, eine Glasübergangstemperatur von weniger als etwa -25°C hat und ein Alkylacrylat aufweist, sowie mindestens einem zweiten Monomeren, das, wenn es homopolymerisiert wird, eine Glasübergangstemperatur von mehr als -25°C hat und mindestens eine ungesättigte Carbonsäure aufweist, wobei die genannten acrylischen Emulsionspolymere einer Elektronenstrahlbestrahlung mit einer Dosis von 5 bis 50 kGy ausgesetzt wurden, die dazu ausreicht, eine Verbesserung der 70°C-Scherhärte des genannten acrylischen Emulsionspolymeren auf mindestens etwa 86 Kilosekunden in Gegenwart von 0,2 bis 5 Gew.-%, bezogen auf das acrylische Emulsionspolymere, von mindestens einem multifunktionalen Monomeren zu erreichen, wobei die genannten Emulsionspolymeren eine 180°-Abziehbarkeit von mindestens etwa 250 N/m und einer Schlaufenhaftfähigkeit von mindestens etwa 200 N/m, bei einem Gewicht des Klebstoffüberzugs von 40 bis 60 g/m² aufweist.

11. Haftklebstoff gemäß einem oder mehreren der vorhergehenden Ansprüche, wobei die Gesamtmenge des ersten acrylischen Monomeren, das in dem Emulsionspolymeren vorhanden ist, zwischen 50 und 95 Gew.-% des Polymeren liegt.

12. Verfahren zur Bildung eines Haftklebstoffs, aufweisend die Schritte:
a) Bilden eines acrylischen Emulsionspolymeren, das eine Glasübergangstemperatur hat, die mindestens 20°C unterhalb der Gebrauchstemperatur liegt, sowie einen Speichermodul (G') von 3,2 x 10⁴ Pa bis 1,2 x 10⁵ Pa bei einer Frequenz von 10⁻¹s⁻¹ und von 1,4 x 10⁵ Pa bis 5,2 x 10⁵ Pa bei einer Frequenz von 10²s⁻¹, und einen Verlustmodul von (G") von 9,5 x 10³ Pa bis 3,1 x 10⁴ Pa bei einer Frequenz von 10¹s⁻¹ und 7x10⁴Pa bis 5,6 bis 10⁵Pa bei einer Frequenz von 10⁻¹s⁻¹, ausgewählt aus der Gruppe bestehend aus verzweigten acrylischen Emulsionspolymeren, linearen acrylischen Emulsionspolymeren und deren Mischungen, wobei jedes der genannten acrylischen Emulsionspolymeren unabhängig voneinander aus einem ersten acrylischen Monomeren, welches, wenn es homopolymerisiert wird, eine Glasübergangstemperatur von weniger als etwa -25°C hat und mindestens einem zweiten Monomeren, welches, wenn es homopolymerisiert wird, eine Glasübergangstemperatur von mehr als etwa -25°C hat, gebildet wird;
b) Härten des genannten acrylischen Emulsionspolymeren durch Einwirkung von Elektronenstrahlbestrahlung in einer Größenordnung von bis zu 100 kGy, was dazu ausreicht, um die 70°C-Scherung des Emulsionspolymeren wesentlich auf mindestens 10 Kilosekunden zu erhöhen, eine 180°-Abziehbarkeit von mindestens 250 N/m zur Verfügung zu stellen, sowie eine Schlaufenhaftfähigkeit von mindestens 200 N/m bei einem Gewicht des Klebstoffüberzugs von 40 bis 60 g/m² in Gegenwart eines multifunktionalen Additivs, das in einer Menge von 0 bis 10 Gew.-% des acrylischen Emulsionspolymeren vorhanden ist, wobei das genannte multifunktionale Additiv zumindest in dem verzweigten Emulsionspolymer in einer vorteilhaften Menge vorhanden ist, sowie
c) Bilden einer Schicht eines Haftklebstoffes aus dem gehärteten acrylischen Emulsionspolymeren aus Schritt b).

13. Verfahren gemäß Anspruch 12, wobei die Härtung bei einer Elektronenstrahldosis von 5-50 kGy auftritt.

14. Verfahren gemäß Anspruch 12 und/oder 13, wobei die 70°C-Scherung auf mindestens 86 Kilosekunden erhöht wird.

15. Verfahren gemäß Anspruch 12, 13 und/oder 14, wobei das multifunktionale Additiv ausgewählt wird aus der Gruppe bestehend aus Pentaerythrit-triacrylat, Trimethylolpropan-trimethacrylat und 1,6-Hexandiol-diacrylat, sowie Mischungen daraus.

16. Verfahren gemäß einem oder mehreren der Ansprüche 12 bis 15, wobei die Elektronenstrahldosis zwischen 5 und 50 kGy liegt.

17. Verfahren gemäß einem oder mehreren der Ansprüche 12 bis 16, wobei das erste Monomer in einer Menge von 50-95 Gew.-% des Polymeren anwesend ist und ausgewählt wird aus der Gruppe bestehend aus Alkylacrylaten, Monoestern von ungesättigten Dicarbonsäuren und Diestern von ungesättigten Dicarbonsäuren, sowie Mischungen daraus.

18. Verfahren gemäß einem oder mehreren der Ansprüche 12 bis 17, wobei das zweite Monomere eine ungesättigten Carbonsäure, z.B. Acrylsäure, enthält.

## Revendications

1. Adhésif sensible à la pression qui comprend un polymère en émulsion ayant une température de transition vitreuse inférieure d'au moins 20°C à la température d'utilisation et choisi dans le groupe formé par les polymères ramifiés en émulsion, les polymères linéaires en émulsion, et leurs mélanges, chacun desdits polymères en émulsion étant constitué indépendamment d'au moins un premier monomère qui, lorsqu'il est homopolymérisé, présente une température de transition vitreuse inférieure à -25°C environ et d'au moins un second monomère qui, lorsqu'il est homopolymérisé, présente une température de transition vitreuse supérieure à -25°C environ, et ledit polymère en émulsion étant durci par irradiation par faisceau d'électrons en présence de 0 à 10 % en poids, par rapport au poids du polymère en émulsion, d'un additif polyfonctionnel, ledit additif polyfonctionnel étant présent en une quantité non nulle lorsque le polymère en émulsion comprend un polymère ramifié en émulsion, ledit adhésif sensible à la pression étant durci pour offrir une tenue au cisaillement à 70°C d'au moins environ 10 kilosecondes et une résistance au pelage à 180° d'au moins environ 250 N/m, et un résultat au test à la boucle d'au moins environ 200 N/m à un poids de couche d'adhésif de 40 à 60 g/m².

2. Adhésif sensible à la pression tel que revendiqué dans la revendication 1, dans lequel le polymère à chaîne ramifiée en émulsion est polymérisé en émulsion à des températures d'au moins 30°C environ, et le polymère linéaire en émulsion est polymérisé en émulsion à une température inférieure à 20°C environ.

3. Adhésif sensible à la pression tel que revendiqué dans l'une quelconque des revendications précédentes, dans lequel chaque polymère en émulsion est indépendamment un polymère acrylique en émulsion ayant une température de transition vitreuse inférieure d'au moins 20°C à la température d'utilisation et ayant un module d'accumulation (G') de 3,2 × 10⁴ Pa à 1,2 × 10⁵ Pa à une fréquence de 10⁻¹ s⁻¹ et de 1,4 × 10⁵ Pa à 5,2 × 10⁵ Pa à une fréquence de 10² s⁻¹ et un module de perte (G") de 9,5 × 10³ Pa à 3,1 × 10⁴ Pa à une fréquence de 10⁻¹ s⁻¹ et de 7 × 10⁴ Pa à 5,6 × 10⁵ Pa à une fréquence de 10² s⁻¹ et constitué indépendamment de 50 à 95 % en poids d'un premier monomère acrylique qui, lorsqu'il est homopolymérisé, présente une température de transition vitreuse inférieure à -25°C environ et d'au moins un second monomère qui, lorsqu'il est homopolymérisé, présente une température de transition vitreuse supérieure à -25°C environ.

4. Adhésif sensible à la pression tel que revendiqué dans l'une quelconque des revendications précédentes, dans lequel le premier monomère est choisi parmi les acrylates d'alkyle, les monoesters d'acides dicarboxyliques insaturés et les diesters d'acides dicarboxyliques insaturés, et leurs mélanges ; l'acrylate de 2-éthylhexyle, l'acrylate d'isooctyle et leurs mélanges.

5. Adhésif sensible à la pression tel que revendiqué dans l'une quelconque des revendications précédentes, dans lequel le second monomère consiste en acide acrylique ou comprend un acide carboxylique insaturé.

6. Adhésif sensible à la pression tel que revendiqué dans l'une quelconque des revendications précédentes, dans lequel l'additif polyfonctionnel est présent en une quantité non nulle d'au plus environ 5 % en poids dans le polymère ramifié, facultativement d'environ 0,2 à environ 5 % en poids du polymère ramifié.

7. Adhésif sensible à la pression tel que revendiqué dans l'une quelconque des revendications précédentes, dans lequel l'additif polyfonctionnel est choisi dans le groupe formé par le triacrylate de pentaérythritol, le triméthacrylate de triméthylolpropane et le diacrylate de 1,6-hexanediol, et leurs mélanges.

8. Adhésif sensible à la pression tel que revendiqué dans l'une quelconque des revendications précédentes, dans lequel ledit polymère en émulsion est durci par exposition à un faisceau d'électrons à une dose d'au plus environ 100 kGy, par exemple de 5 à 50 kGy.

9. Adhésif sensible à la pression tel que revendiqué dans l'une quelconque des revendications précédentes, dans lequel la dose de faisceau d'électrons utilisée pour le durcissement est suffisante pour accroître la tenue au cisaillement à 70°C du polymère en émulsion durci jusqu'à au moins environ 86 kilosecondes, en donnant facultativement une résistance au pelage à 180° d'au moins environ 250 N/m et un résultat au test à la boucle d'au moins environ 200 N/m à un poids de couche d'adhésif de 40 à 60 g/m².

10. Adhésif sensible à la pression tel que revendiqué dans l'une quelconque des revendications précédentes ayant des propriétés améliorées au cisaillement aux températures élevées et comprenant un polymère acrylique en émulsion durci par faisceau d'électrons ayant une température de transition vitreuse inférieure d'au moins 20°C à la température d'utilisation, un module d'accumulation (G') de 3,2 x 10⁴ Pa à 1,2 x 10⁵ Pa à une fréquence de 10⁻⁵ s⁻¹ et de 1,4 x 10⁵ Pa à 5,2 x 10⁵ Pa à une fréquence de 10⁵ s⁻¹ et un module de perte (G") de 9,5 x 10³ Pa à 3,1 x 10⁴ Pa à une fréquence de 10¹ s⁻¹ et de 7 x 10⁴ Pa à 5,6 x 10⁵ Pa à une fréquence de 10² s⁻¹, ledit polymère acrylique en émulsion étant formé d'un mélange d'au moins un polymère acrylique en émulsion polymérisé en émulsion à une température d'au moins 30°C environ et d'au moins un polymère linéaire en émulsion polymérisé en émulsion à une température inférieure à 20°C environ, lesdits polymères en émulsion étant indépendamment constitués d'un premier monomère acrylique qui, lorsqu'il est homopolymérisé, présente une température de transition vitreuse inférieure à -25°C environ et qui comprend un acrylate d'alkyle et d'au moins un second monomère qui, lorsqu'il est homopolymérisé, présente une température de transition vitreuse supérieure à -25°C environ et qui comprend au moins un acide carboxylique insaturé, lesdits polymères acryliques en émulsion ayant été exposés à un faisceau d'électrons à une dose de 5 à 50 kGy et suffisante pour produire un accroissement de la tenue au cisaillement à 70°C dudit polymère acrylique en émulsion jusqu'à au moins environ 86 kilosecondes, en présence de 0,2 à 5 % en poids, par rapport au poids des polymères acryliques en émulsion, d'au moins un monomère polyfonctionnel, lesdits polymères en émulsion ayant une résistance au pelage à 180° d'au moins environ 250 N/m et un résultat au test à la boucle d'au moins environ 200 N/m à un poids de couche d'adhésif de 40 à 60 g/m².

11. Adhésif sensible à la pression tel que revendiqué dans l'une quelconque des revendications précédentes, dans lequel le total du premier monomère acrylique présent dans le polymère en émulsion est de 50 à 95 % en poids du polymère.

12. Procédé pour former un adhésif sensible à la pression comprenant les étapes suivantes :
a) préparer un polymère acrylique en émulsion ayant une température de transition vitreuse inférieure d'au moins 20°C à la température d'utilisation et ayant un module d'accumulation (G') de 3,2 x 10⁴ Pa à 1,2 x 10⁵ Pa à une fréquence de 10⁻¹ s⁻¹ et de 1,4 x 10⁵ Pa à 5,2 x 10⁵ Pa à une fréquence de 10² s⁻¹ et un module de perte (G") de 9,5 x 10³ Pa à 3,1 x 10⁴ Pa à une fréquence de 10¹ s⁻¹ et de 7 × 10⁴ Pa à 5,6 x 10⁵ Pa à une fréquence de 10⁻¹ s⁻¹ et qui est choisi dans le groupe formé par les polymères acryliques ramifiés en émulsion, les polymères acryliques linéaires en émulsion, et leurs mélanges, chacun desdits polymères acryliques en émulsion étant indépendamment constitué d'un premier monomère acrylique qui, lorsqu'il est homopolymérisé, présente une température de transition vitreuse inférieure à -25°C environ et d'au moins un second monomère qui, lorsqu'il est homopolymérisé, présente une température de transition vitreuse supérieure à -25°C environ ;
b) durcir ledit polymère acrylique en émulsion par l'action d'un faisceau d'électrons à une dose d'au plus environ 100 kGy et suffisante pour accroître notablement la tenue au cisaillement à 70°C du polymère en émulsion jusqu'à au moins 10 kilosecondes, pour donner une résistance au pelage à 180° d'au moins 250 N/m et un résultat au test à la boucle d'au moins 200 N/m à un poids de couche d'adhésif de 40 à 60 g/m², en présence d'un additif polyfonctionnel présent en une quantité de 0 à 10 % en poids du polymère acrylique en émulsion ; ledit additif polyfonctionnel étant présent en une quantité non nulle au moins lorsqu'un polymère ramifié en émulsion est présent ; et
c) former une couche d'adhésif sensible à la pression à partir du polymère acrylique en émulsion durci de l'étape b).

13. Procédé tel que revendiqué dans la revendication 12, dans lequel le durcissement a lieu à une dose de faisceau d'électrons de 5 à 50 kGy.

14. Procédé tel que revendiqué dans la revendication 12 ou 13, dans lequel la tenue au cisaillement à 70°C est accrue jusqu'à au moins 86 kilosecondes.

15. Procédé tel que revendiqué dans la revendication 12, 13 ou 14, dans lequel l'additif polyfonctionnel est choisi dans le groupe formé par le triacrylate de pentaérythritol, le triméthacrylate de triméthylolpropane et le diacrylate de 1,6-hexanediol, et leurs mélanges.

16. Procédé tel que revendiqué dans l'une quelconque des revendications 12 à 15, dans lequel la dose de faisceau d'électrons est de 5 à 50 kGy.

17. Procédé tel que revendiqué dans l'une quelconque des revendications 12 à 16, dans lequel le premier monomère est présent en une quantité de 50 à 95 % en poids du polymère et il est choisi dans le groupe formé par les acrylates d'alkyle, les monoesters d'acides dicarboxyliques insaturés et les diesters d'acides dicarboxyliques insaturés, et leurs mélanges.

18. Procédé tel que revendiqué dans l'une quelconque des revendications 12 à 17, dans lequel le second monomère comprend un acide carboxylique insaturé, par exemple l'acide acrylique.
